**Europäisches Patentamt**

**European Patent Office**

**Office européen des brevets**

(19)

(11) Veröffentlichungsnummer: **0 014 398**
**B1**

# EUROPÄISCHE PATENTSCHRIFT

(12)

(45) Veröffentlichungstag der Patentschrift:
**12.05.82**

(51) Int. Cl.³: **G 01 B 11/06**, G 01 B 11/02

(21) Anmeldenummer: **80100400.3**

(22) Anmeldetag: **25.01.80**

(54) **Vorrichtung zur berührungslosen Dicken- oder Abstandsmessung.**

(30) Priorität: **08.02.79 DE 2904833**

(43) Veröffentlichungstag der Anmeldung:
**20.08.80 Patentblatt 80/17**

(45) Bekanntmachung des Hinweises auf die Patenterteilung:
**12.05.82 Patentblatt 82/19**

(84) Benannte Vertragsstaaten:
**BE FR GB IT LU NL SE**

(56) Entgegenhaltungen:
**DE-A-2 508 836**
**FR-A-2 336 660**

(73) Patentinhaber: **SIEMENS AKTIENGESELLSCHAFT**
**Berlin und München, Postfach 22 02 61,**
**D-8000 München 22 (DE)**

(72) Erfinder: **Bodlaj, Viktor, Dr., Werinher-Strasse 69,**
**D-8000 München 90 (DE)**

### Vorrichtung zur berührungslosen Dicken- oder Abstandsmessung

Die Erfindung betrifft eine Vorrichtung zur berührungslosen Dicken- oder Abstandsmessung mit einer Lichtquelle zur Erzeugung eines scharf gebündelten Lichtstrahlbündels in eine vorgebbare Richtung, einem Strahlablenker zur periodischen Auslenkung des Lichtstrahlbündels quer zur vorgebbaren Richtung, einem dem Strahlablenker nachgeordneten Strahlteiler, einem ersten und zweiten lichtempfindlichen Detektor im Bereich des durch den Strahlteiler aus der vorgebbaren Richtung ausgeblendeten Lichtstrahlbündels, wobei jeder Detektor nur Licht aus einer bestimmten Richtung registriert (Detektor mit optischer Achse), mindestens einem dritten lichtempfindlichen Detektor, dessen optische Achse das Lichtstrahlbündel in einer Null-Ebene schneidet, einer Auswertelektronik, die aus den Detektorsignalen eine der Ablenkzeit des Lichtstrahlbündels zwischen dem ersten und zweiten Detektor entsprechende Kontrollspannung und mindestens einen Spannungsimpuls erzeugt, der ein Maß für den Abstand einer Oberfläche eines Meßobjekts von der Null-Ebene ist, einem Impuls-Digital-Wandler, dem der Spannungsimpuls zugeführt ist, und einem daran anschließenden Digital-Analog-Wandler.

Bei einer derartigen bekannten Vorrichtung (Siemens Forschungs- und Entwicklungsbericht Bd. 6 (1977), Nr. 3, Seite 180−188) basiert die Dicken- oder Abstandsmessung auf der Bestimmung der Ablenkzeit, die das Lichtstrahlbündel benötigt, um von einem bestimmten Punkt auf der Null-Ebene bis zu einem bestimmten Punkt auf dem Meßobjekt zu gelangen. Die Ablenkzeit hängt nicht nur von dem Abstand zwischen den beiden Punkten ab, sondern auch von der Ablenkgeschwindigkeit des Lichtstrahlbündels. Da die Ablenkung des Lichtstrahlbündels periodisch wiederholt wird, hängt die Ablenkgeschwindigkeit sowohl von der Ablenkfrequenz als auch von der Ablenkamplitude ab. Das bedeutet, daß jede Veränderung der Ablenkfrequenz oder der Ablenkamplitude die Ablenkgeschwindigkeit verändert und damit einen Meßfehler hervorruft. Insbesondere bei schnellen Messungen, bei denen der Meßwert bei jeder einzelnen Ablenkung ermittelt werden muß, kann dieser Meßfehler auch nicht durch eine Stabilisierungsschaltung für die Ablenkgeschwindigkeit vollständig vermieden werden.

Aus dem eingangs genannten Forschungs- und Entwicklungsbericht ist bereits bekannt, den durch die Veränderung der Ablenkgeschwindigkeit verursachten Meßfehler zu beheben, indem der Meßwert bei der Auswertung nach folgender Gleichung korrigiert wird:

$$\Delta t_{dk} = \frac{\Delta t_N}{\Delta t_{BA}} \, \Delta t_d \qquad (1)$$

Dabei ist $\Delta t_N$ ein Zeitnormal; $\Delta t_{BA}$ die Zeit, die das Lichtbündel benötigt, um von einer ersten Fotodiode, die die Null-Ebene bestimmt, bis zu einer zweiten Fotodiode, die die Ablenkzeit angibt, zu gelangen; $\Delta t_d$ ist die tatsächliche und $\Delta t_{dk}$ die korrigierte Meßzeit. Diese wird nach Digitalisierung der gemessenen Zeiten mit Hilfe eines Mikrocomputers berechnet.

Für die meisten Anwendungsfälle ist es erforderlich, daß die gemessenen Zeiten nicht nur in digitaler, sondern auch in analoger Form vorliegen, so daß eine unmittelbare Regelung beispielsweise der Amplitude des Lichtstrahlbündels oder − bei der Verwendung einer solchen Vorrichtung zur Überwachung der Dicke von Walzgut − zur Regelung des Walzenabstands vorgenommen werden kann.

In vielen Fällen kommt es nicht einmal auf die genaue Berechnung der gemessenen Dicke oder des gemessenen Abstands an. Gerade in solchen Fällen würde ein Mikrocomputer zur Meßzeitkorrektur einen erheblichen zusätzlichen Aufwand bedeuten.

Der vorliegenden Erfindung liegt daher die Aufgabe zugrunde, bei einer Vorrichtung der eingangs genannten Art die Meßzeit analog zumindest annähernd nach der angegebenen Gleichung zu korrigieren.

Diese Aufgabe wird erfindungsgemäß dadurch gelöst, daß die Referenzspannung des Digital-Analog-Wandlers bei einer Abweichung der Kontrollspannung von einer Sollspannung gegensinnig zur Abweichung veränderbar ist. Angenommen, die Ablenkgeschwindigkeit des Lichtstrahlbündels habe sich vergrößert. Das hätte zur Folge, daß die Ablenkzeit des Lichtstrahlbündels zwischen dem ersten und zweiten Detektor kürzer wird. Dementsprechend würde auch die Kontrollspannung kleiner.

Auch die Breite des Spannungsimpulses und der daraus abgeleitete Digitalwert würden kleiner. Gleichzeitig wird jedoch die für die Digital-Analog-Wandlung benötigte Referenzspannung dem Betrag nach vergrößert und der sonst wegen der vergrößerten Ablenkgeschwindigkeit zu klein erscheinende Meßwert auf den Normalwert korrigiert. Der gleiche Vorgang gilt auch, wenn sich die Ablenkgeschwindigkeit verkleinert. In diesem Fall wird die Kontrollspannung größer. Gleichzeitig nimmt die Referenzspannung des Digital-Analog-Wandlers dem Betrag nach ab. Dadurch wird der sonst wegen der langsamen Ablenkung zu groß erscheinende Meßwert auf den Normalwert verkleinert. Durch die Veränderung der Referenzspannung wird eine Korrektur gemäß folgender Gleichung durchgeführt:

$$U_{dk} = \frac{U_d \cdot U_{Rk}}{U_R} \qquad (2)$$

Dabei ist $U_d$ der analoge Meßwert entsprechend $\Delta t_d$, $U_R$ die feste Referenzspannung, $U_{RK}$

die korrigierte Referenzspannung und $U_{dk}$ der korrigierte analoge Meßwert. Die Gleichung (2) erfüllt die Gleichung (1) nicht voll. Da die Fehler für die Ablenkgeschwindigkeit normalerweise unter 1% bleiben, ist die Abweichung vernachlässigbar klein.

Bisher war stets nur von einem Spannungsimpuls und damit der Möglichkeit der Abstandsmessung die Rede. Soll die Dicke eines Meßobjekts bestimmt werden, so ist dazu ein weiterer Detektor für eine zweite Abstandsmessung und ein weiterer Impuls-Digital-Wandler und ein Digital-Analog-Wandler erforderlich. Da sich ein Fehler in der Ablenkgeschwindigkeit für beide Abstandsmessungen gleichermaßen auswirkt, muß zur Korrektur auch die Referenzspannung des weiteren Digital-Analog-Wandlers verändert werden.

Eine vorteilhafte Ausgestaltung der Vorrichtung ergibt sich dadurch, daß ein Verstärker vorgesehen ist, der eingangsseitig mit der Kontrollspannung beaufschlagt ist und dessen Verstärkungsfaktor so gewählt ist, daß ohne eine Abweichung (Kontrollspannung gleich Sollspannung) die Kontrollspannung auf den für diesen Fall benötigten Referenzspannungswert verstärkt wird, daß der Ausgang dieses Verstärkers mit dem Eingang eines bereits mit einer festen Referenzspannung beaufschlagten Differenzverstärkers verbunden ist und daß der Ausgang des Differenzverstärkers mit dem Eingang eines ebenfalls mit der festen Referenzspannung beaufschlagten Summationsverstärkers verbunden ist, dessen Ausgangsspannung die veränderbare Referenzspannung darstellt.

Zunächst wird hierbei in einem Verstärker die Kontrollspannung auf die für den Normalfall benötigte Referenzspannung verstärkt. Im Normalfall ergibt sich dann am Ausgang des Differenzverstärkers die Spannung Null, d. h. die Referenzspannung des Digital-Analog-Wandlers bleibt unverändert. Weicht die Kontrollspannung von der Sollspannung ab, so ergibt sich eine Differenzspannung, die zu der festen Referenzspannung addiert wird.

Anhand einer Figur wird ein Ausführungsbeispiel der Erfindung im folgenden näher beschrieben und erläutert. Dabei zeigt die einzige Figur eine Vorrichtung zur Abstandsmessung mit einem Blockschaltbild für die analoge Korrektur des Meßwertes.

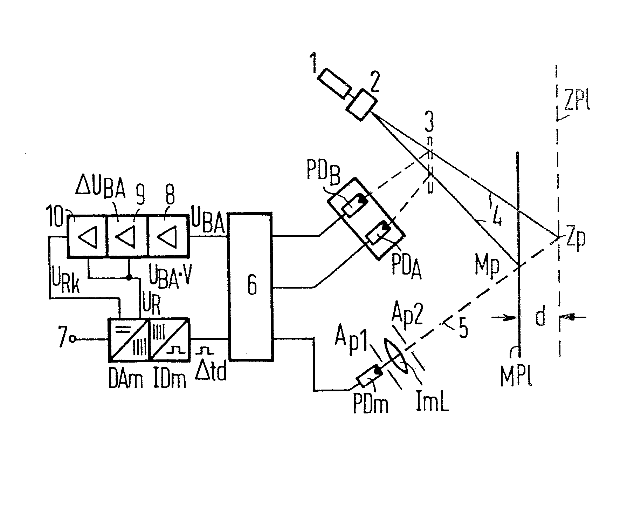

Bis auf das Blockschaltbild ist die Vorrichtung beispielsweise aus dem Siemens Forschungs- und Entwicklungsbericht Bd. 4 (1975), Nr. 6, Seiten 336 – 344, insbesondere der Fig. 8 und der zugehörigen Beschreibung bekannt.

Die Vorrichtung besitzt als Lichtquelle einen Laser 1, dessen scharf gebündelter Lichtstrahl in einen Strahlablenker 2 fällt. Hinter dem Strahlablenker 2 ist ein Strahlteiler 3 angeordnet, mit dessen Hilfe ein Teil des Lichtstrahlbündels 4 ausgeblendet wird. Im Bereich dieses ausgeblendeten Lichtstrahlbündels befinden sich zwei Fotodioden $PD_B$ und $PD_A$, die jeweils nur Licht aus einer bestimmten Richtung aufnehmen können. Weiterhin ist eine Fotodiode $PD_m$ vorgesehen, die ebenfalls nur Licht aus einer bestimmten Richtung aufnehmen kann. Dazu sind Aperturblenden $A_{P1}$, $A_{P2}$ und eine Abbildungsoptik ImL vorgesehen, die eine optische Achse bzw. die Abbildungsrichtung bilden.

Zu einem bestimmten Zeitpunkt ist das Lichtstrahlbündel 4 so gerichtet, daß es die optische Achse 5 auf einer Null-Ebene ZPl im Punkt Zp schneidet. Zum gleichen Zeitpunkt wird der durch den Strahlteiler 3 ausgeblendete Teilstrahl auf die Fotodiode $PD_B$ geworfen, d. h. dieser Detektor gibt zu diesem Zeitpunkt ein Signal ab. Zu einem späteren Zeitpunkt schneiden sich die optische Achse 5 und das Lichtstrahlbündel im Punkt $M_p$ auf der Ebene MPl des Meßobjekts, so daß das Streulicht von der Oberfläche des Meßobjekts von der Fotodiode $PD_m$ aufgefangen werden und ein Meßsignal erzeugen kann. Der Punkt $M_p$ hat von der Null-Ebene ZPl den Abstand d.

Die Abstandsmessung basiert auf einer Messung der Zeit, die das periodisch ausgelenkte Lichtstrahlbündel 4 bei jeder Auslenkung benötigt, um vom Anfangspunkt $Z_p$ zum Meßpunkt $M_p$ zu gelangen. Die Zeit, die das durch den Strahlteiler 3 ausgeblendete Lichtstrahlbündel benötigt, um vom Detektor $PD_B$ zum Detektor $PD_A$ zu gelangen, ist ein Maß für die Ablenkgeschwindigkeit des Lichtstrahlbündels.

Die Detektorsignale sind einer Auswertelektronik 6 zugeführt, die aus den Signalen der Detektoren $PD_B$ und $PD_A$ eine der Ablenkgeschwindigkeit des Lichtstrahlbündels entsprechende Kontrollspannung $U_{BA}$ und aus den Detektorsignalen der Fotodioden $PD_B$ und $PD_m$ einen Spannungsimpuls erzeugt, dessen Breite $\Delta t_d$ ein Maß für den zu messenden Abstand darstellt. Diese Auswertelektronik 6 ist beispielsweise aus dem Siemens Forschungs- und Entwicklungsbericht Bd. 4 (1975), Nr. 6, Seite 340, Fig. 8 bekannt. Der Spannungsimpuls der Breite $\Delta t_d$ wird in einem Impuls-Digital-Wandler $ID_m$ digitalisiert. Der Digitalwert wird in einem anschließenden Digital-Analog-Wandler $DA_m$ in einen Analogwert überführt, der an einem Ausgang 7 als Maß für den zu messenden Abstand zur Verfügung steht. Der Digital-Analog-Wandler $DA_m$ arbeitet normalerweise mit einer Referenzspannung $U_R$, die entsprechend der Bitzahl und digitalen Eingabe durchgeschaltet wird. Im vorliegenden Ausführungsbeispiel wird diese Referenzspannung erfindungsgemäß korrigiert, wenn sich die Ablenkgeschwindigkeit ändert. Dazu wird die Kontrollspannung $U_{BA}$, die der Ablenkgeschwindigkeit entspricht, in einem ersten Verstärker 8 auf die für den Normalfall benötigte Referenzspannung verstärkt. Der Verstärkungsfaktor V des Verstärkers 8 ist so gewählt, daß sich ohne eine Abweichung, d. h. die Kontrollspannung $U_{BA}$ ist gleich der Sollspannung, am Ausgang des Verstärkers 8 die Referenzspannung $U_R$ ergibt. Die Ausgangsspannung des Verstärkers 8 ist ebenso wie eine feste Referenzspannung $U_R$ einem Differenzverstärker 9 zugeführt. Im Normalfall ist die Differenzspannung am Ausgang des Differenzverstärkers 9 gleich Null ($U_{BA} \cdot V = U_R$). Wenn sich die Ablenkgeschwindigkeit und dadurch die Kontrollspannung $U_{BA}$ ändert, entsteht am Ausgang des Differenzverstärkers 9 eine Spannung

$$U_{BA} = U_R - U_{BA} \cdot V \lesseqgtr 0$$

Diese Differenzspannung $U_{BA}$ wird in einem weiteren Verstärker 10 zu der festen Referenzspannung $U_R$ addiert. Am Ausgang dieses Verstärkers 10 ergibt sich somit als korrigierte Referenzspannung für den Digital-Analog-Wandler $DA_m$

$$U_{Rk} = U_R + \Delta U_{BA}.$$

Vergrößert sich beispielsweise die Ablenkgeschwindigkeit aus irgendeinem Grunde, dann wird die Zeit, die das Lichtstrahlbündel benötigt, um von der Fotodiode $PD_B$ bis zur Fotodiode $PD_A$ zu kommen, kürzer und dementsprechend die Kontrollspannung $U_{BA}$ kleiner. Am Ausgang des Differenzverstärkers 9 entsteht deshalb eine positive Differenzspannung $\Delta U_{BA}$, die zu der positiven festen Referenzspannung $U_R$ addiert wird. Dadurch wird die für die Digital-Analog-Wandlung benötigte Referenzspannung dem Betrag nach vergrößert und der sonst wegen der vergrößerten Ablenkgeschwindigkeit zu klein erscheinende Meßwert auf den Normalwert korrigiert. Entsprechendes gilt, wenn sich die Ablenkgeschwindigkeit verkleinert.

Im vorliegenden Ausführungsbeispiel ist die feste Referenzspannung $U_R$ direkt dem Digital-Analog-Wandler $DA_m$ entnommen. Ebenso ist es jedoch auch möglich, eine separate Referenzspannungsquelle zu verwenden.

Unter Umständen kann es auch zweckmäßig sein, die feste Referenzspannung $U_R$ zunächst noch zwischenzuverstärken, beispielsweise zur Vorzeichenumkehr.

Für eine Dickenmessung müßte, wie beispielsweise aus dem Siemens Forschungs- und Entwicklungsbericht Bd. 6 (1977), Nr. 6, Seite 185, Fig. 14 bekannt ist, eine weitere Fotodiode vorgesehen sein, ebenso müßte die Auswertelektronik einen weiteren Spannungsimpuls in Abhängigkeit vom Signal dieser weiteren Fotodiode erzeugen, der dann wiederum auf einen Impuls-Digital-Wandler und einen daran anschließenden Digital-Analog-Wandler gegeben wird. Die Differenz der Ausgangssignale dieser beiden Digital-Analog-Wandler ist dann ein Maß für die Dicke des Meßobjekts. Auch die Referenzspannung dieses weiteren Digital-Analog-Wandlers müßte korrigiert werden. Für beide Digital-Analog-Wandler kann die gleiche Korrekturschaltung verwendet werden.

## Patentansprüche

1. Vorrichtung zur berührungslosen Dicken- oder Abstandsmessung mit einer Lichtquelle (1) zur Erzeugung eines scharf gebündelten Lichtstrahlbündels in eine vorgebbare Richtung, einem Strahlablenker (2) zur periodischen Auslenkung des Lichtstrahlbündels quer zur vorgebbaren Richtung, einem dem Strahlablenker (2) nachgeordneten Strahlteiler (3), einem ersten und zweiten lichtempfindlichen Detektor ($PD_A$, $PD_B$) im Bereich des durch den Strahlteiler (3) aus der vorgebbaren Richtung ausgeblendeten Lichtstrahlbündels, wobei jeder Detektor nur Licht aus einer bestimmten Richtung registriert (Detektor mit optischer Achse), mindestens einem dritten lichtempfindlichen Detektor ($PD_m$), dessen optische Achse das Lichtstrahlbündel in einer Null-Ebene schneidet, einer Auswertelektronik (6), die aus den Detektorsignalen eine der Ablenkzeit des Lichtstrahlbündels zwischen dem ersten und zweiten Detektor ($PD_A$, $PD_B$) entsprechende Kontrollspannung und mindestens einen Spannungsimpuls erzeugt, der ein Maß für den Abstand einer Oberfläche eines Meßobjekts von der Null-Ebene ist, einem Impuls-Digital-Wandler ($ID_m$), dem der Spannungsimpuls zugeführt ist und einem daran anschließenden Digital-Analog-Wandler ($DA_m$), dadurch gekennzeichnet, daß die Referenzspannung ($U_{Rk}$) des Digital-Analog-Wandlers ($DA_m$) bei einer Abweichung der Kontrollspannung ($U_{BA}$) von einer Sollspannung gegensinnig zur Abweichung veränderbar ist.

2. Vorrichtung nach Anspruch 1, dadurch gekennzeichnet, daß ein Verstärker (8) vorgesehen ist, der eingangsseitig mit der Kontrollspannung ($U_{BA}$) beaufschlagt ist und dessen Verstärkungsfaktor V so gewählt ist, daß ohne eine Abweichung (Kontrollspannung gleich Sollspannung) die Kontrollspannung ($U_{BA}$) auf den für diesen Fall benötigten Referenzspannungswert ($U_R$) verstärkt wird, daß der Ausgang dieses Verstärkers (8) mit dem Eingang eines bereits mit einer festen Referenzspannung ($U_R$) beaufschlagten Differenzverstärkers (9) verbunden ist und daß der Ausgang des Differenzverstärkers (9) mit dem Eingang eines ebenfalls mit der festen Referenzspannung ($U_R$) beaufschlagten Summationsverstärkers (10) verbunden ist, dessen Ausgangsspannung die veränderbare Referenzspannung ($U_{Rk}$) darstellt.

## Claims

1. A device for contact-free thickness or range measurement, comprising a light source (1) for producing a sharply focussed light beam in a pre-determinable direction, a beam deflector (2) for periodically deflecting the light beam transversely to the predeterminable direction, a beam-splitter (3) which is connected following the beam deflector (2), a first and a second light-sensitive detector ($PD_A$, $PD_B$) in the path of a light beam component which is diverted from the pre-determinable direction by the beam-splitter (3), whereby each detector only registers light from a particular direction (detector with optical axis), at least a third light-sensitive detector ($PD_m$) whose optical axis intersects the light beam at a zero-plane, an evaluation electronics unit (6) which produces from the detector signals a control voltage corresponding to the time for deflection of the light beam between the first and second detector ($PD_A$, $PD_B$) and produces at least one voltage impulse which is a measure of the spacing of a surface of a test object from the zero-plane, a pulse-digital converter ($ID_m$) to which the voltage pulse is fed, and a following digital analoque converter ($DA_m$), characterised in that in the case of a deviation fo the control voltage ($U_{BA}$) from a theoretical voltage, the reference voltage ($U_{Rk}$) of the digital-analogue converter ($DA_m$) is varied in an opposite sense to the deviation.

2. A device as claimed in claim 1, characterised in that an amplifier (8) is provided whose input is supplied with the control voltage ($U_{BA}$) and whose amplification factor V is so selected that control voltage ($U_{BA}$) is amplified to the reference voltage value ($U_R$) required for this case without a deviation (control voltage equals theoretical voltage), that the output of this amplifier (8) is connected to the input of a differential amplifier (9) which has already been supplied with a fixed reference voltage ($U_R$), an that the output of the differential amplifier (9) is connected to the input of a summation amplifier (10), which is also supplied with the fixed reference voltage ($U_R$), and whose output signal represents the variable reference voltage ($U_{Rk}$).

**Revendications**

1. Dispositif pour la mesure, sans contact, d'épaisseurs et d'écarts, du type comportant une source lumineuse (1) pour produire un faisceau lumineux fortement focalisé dans une direction donnée à l'avance, un déviateur (2) du faisceau pour le dévier périodiquement dans le sens transversal à la direction donnée à l'avance, un diviseur de rayonnement (3) disposé en aval dudit déviateur (2) du faisceau, un premier et un second détecteurs photosensibles ($PD_A$, $PD_B$) dans la zone du faisceau lumineux isolé de la direction donnée à l'avance par le diviseur de rayonnement (3), chaque détecteur n'enregistrant de la lumière ne provenant que d'une direction déterminée (détecteur à axe optique), au moins un troisième détecteur photosensible ($PD_m$) dont l'axe optique coupe le faisceau lumineux dans un plan zéro, une électronique d'évaluation (6) produisant à partir des signaux des détecteurs une tension de contrôle qui correspond à la durée de déviation du faisceau lumineux entre le premier et le second détecteur ($PD_A$, $PD_B$), ainsi qu'au moins une impulsion de tension qui est une mesure pour la distance entre la surface d'un objet de mesure et le plan zéro, un transducteur impulsion-numérique ($ID_m$) auquel on applique l'impulsion de tension, et un convertisseur numérique-analogique ($DA_m$) relié audit transducteur, caractérisé par le fait que la tension de référence ($U_{Rk}$) du convertisseur numérique-analogique ($DA_m$) est susceptible, lors d'une variation de la tension de contrôle ($U_{BA}$) par rapport à une tension de référence, d'être modifiée en sens inverse de cette variation.

2. Dispositif selon la revendication 1, caractérisé par le fait qu'il est prévu un amplificateur (8) à l'entrée duquel on applique la tension de contrôle ($U_{BA}$) et dont le facteur d'amplification V est choisi de telle manière qu'en l'absence d'une variation (tension de contrôle égale à tension de référence), la tension de contrôle ($U_{BA}$) est amplifiée à la valeur de la tension de référence ($U_R$) nécessaire pour ce cas, que la sortie de cet amplificateur (8) est reliée à l'entrée d'un amplificateur différentiel (9) qui reçoit déjà une tension de référence fixe ($U_R$) et que la sortie de l'amplificateur différentiel (9) est reliée à l'entrée d'un amplificateur de sommation (10) qui reçoit également la tension de référence fixe ($U_R$), la tension de sortie de cet amplificateur de sommation représentant la tension de référence ($U_{Rk}$) qui est susceptible de varier.